# EUROPÄISCHE PATENTSCHRIFT

(11) **EP 1 864 831 B1**
(45) Veröffentlichungstag und Bekanntmachung des Hinweises auf die Patenterteilung: **31.12.2008**
(21) Anmeldenummer: 07450074.5
(22) Anmeldetag: 19.04.2007
(51) Int. Cl.: B60C 27/10

(54) **Anschluss- und Führungselement für eine Reifenkette**
Connecting and guide element for a tyre chain
Dispositif de raccordement et d'introduction pour une chaîne de pneu

(30) Priorität: 31.05.2006 AT 9412006
(43) Veröffentlichungstag der Anmeldung: 12.12.2007
(73) Patentinhaber: PEWAG AUSTRIA GmbH, 8020 Graz (AT)
(72) Erfinder: Pengg, Ägyd, 9020 Klagenfurt (AT)
(74) Vertreter: Matschnig, Franz

(56) Entgegenhaltungen:
- DE-A1- 2 651 162
- DE-A1- 3 526 027
- DE-C1- 10 105 410
- DE-U1-7202004 010 57

## Beschreibung

Die Erfindung bezieht sich auf ein Anschluss- und Führungselement für eine Reifenkette zur Verbindung eines Seitennetzes der Reifenkette mit einem seitlichen Spannstrang sowie zur Aufnahme einer Überlänge der Spannkette, wobei das Element zumindest zwei, Ösen zur Aufnahme von Spannstrang, Überlänge und Verbindungsgliedern zum Seitennetz besitzt und zwei Ösen für Spannstrang und Überlänge in einer gemeinsamen Ebene liegen,

Ein aus der EP 1 355 792 B1 bekannt gewordenes Element dieser Art weist lediglich zwei Ösen auf, von welchen eine Öse größer ausgebildet ist, damit es nicht nur ein Endglied des Seitennetzes aufnehmen kann, sondern auch Platz für das Durchziehen einer Überlänge einer Spannkette bietet. Diese Druckschrift bildet dem Oberbegriff des Anspruches 1.

Bei einer Kette mit derartigen Elemente kann es während des Spannens zu einer starken Schrägstellung der Elemente kommen, wobei dieser Effekt noch verstärkt wird, wenn, wie in dem Dokument angegeben, die Überlänge in der radial weiter außen gelegenen Öse und die Spannkette in der weiter innen gelegenen Öse aufgenommen ist. Eine solche Schrägstellung führt wiederum zu einem erhöhten Aufwand für das Ausrichten der Elemente während der Montage. Ein weiteres Problem lieg darin, dass durch das zentrale Einhängen eines geschweißten Ringes der Reifenkette in die äußere Öse die Spannkette weiter zur Radmitte hin gelangt, als es für die Befestigung der Kette erforderlich ist.

Eine Aufgabe der Erfindung liegt darin, mit Hilfe eines neuen Anschluss- und Führungselementes bzw. einer entsprechenden Reifenkette die genannten Nachteile zu beseitigen.

Diese Aufgabe wird mit ein Anschluss- und Führungselement der eingangs genannten Art gelöst, bei welchem erfindungsgemäß zusätzlich zu den zwei, in einer ersten Ebene liegenden Ösen zur Aufnahme von Spannstrang und dessen Überlänge zwei in einer zweiten, zu der ersten Ebene im wesentlichen orthogonal verlaufenden Ebene liegende Ösen für die Aufnahme der Verbindungsglieder zum Seitennetz vorgesehen sind.

Dank der Anordnung der zwei äußeren Ösen wird ein Schrägstellen des Elementes verringert, wobei diese beiden Ösen auch zu einer Verringerung der Gesamtbauhöhe - in radialer Richtung - führen.

Eine auch in Hinblick auf eine einfache Herstellbarkeit günstige Variante des Elementes zeichnet sich dadurch aus, dass es zwei plattenartige Abschnitte aufweist, nämlich einen größeren Innenabschnitt mit den in der ersten Ebene liegenden Ösen und einen kleineren Außenabschnitt mit den in der zweiten, zu der ersten Ebene im wesentlichen orthogonal verlaufenden Ebene liegende Ösen.

Zweckmäßig ist es weiters, wenn die in der ersten Ebene liegenden Ösen im wesentlichen kreisrund ausgebildet sind, nicht zuletzt deshalb, da in diesem Fall die Ösen auch durch Bohren ausgebildet werden können. Aus diesem Grunde kann es auch empfehlenswert sein, wenn die in der zweiten Ebene liegenden Ösen im wesentlichen kreisrund ausgebildet sind.

Falls die Stärke des plattenförmigen Innenabschnittes radial nach innen zu abnimmt, lassen sich Material und Gewicht einsparen, insbesondere deshalb, da die Überlänge keine breite Abstützung benötigt und problemlos von den inneren Ösen aufgenommen werden kann.

Aus Gründen einer vereinfachten Fertigung und Montage kann es zweckmäßig sein, falls die in der ersten Ebene liegenden Ösen und/oder die in der zweiten Ebene liegenden Ösen im wesentlichen gleich ausgebildet sind.

Eine erhöhte Festigkeit bei insgesamt geringem Materialbedarf ergibt sich, wenn zwei Verstärkungsstege vorgesehen sind, welche die Seitenflächen des plattenförmigen Außenabschnittes mit dem äußeren Rand des plattenförmigen Innenabschnittes verbinden.

Die Aufgabe der Erfindung wird auch mit einer Reifenkette mit einem die Lauffläche eines Reifens bedeckenden, Gleit- und/oder Kettenschutzglieder aufweisenden Netz sowie mit zumindest einem Seitennetz gelöst, bei welchem das Seitennetz über einen seitlichen Spannstrang mit Hilfe einer Mehrzahl von Anschluss- und Führungselementen gemäß der Erfindung bzw. deren Varianten verbunden ist und eine Überlänge des Spannstranges in einer der Ösen der Elemente aufgenommen werden kann.

Vorteilhaft ist es dabei, wenn der Spannstrang als Spannkette ausgebildet ist.

Um die Montage zu vereinfachen ist es weiters zweckmäßig, wenn in die in der zweiten Ebene liegenden Ösen je ein geschweißtes Kettenglied eingefügt ist, welches seinerseits an das Seitennetz angeschlossen ist.

Die Erfindung samt weiteren Vorteilen ist im Folgenden an Hand beispielsweiser Ausführungsformen näher erläutert, die in der Zeichnung veranschaulicht sind. In dieser zeigen
Fig. 1 eine schematische Seitenansicht einer Reifenkette nach der Erfindung,
Fig. 2 ein erfindungsgemäßes Anschluss- und Führungselement mit zwei eingefügten Kettengliedern in schaubildlicher Darstellung,
Fig. 3 in einem Schnitt senkrecht zu einer Ebene 018 das in Fig. 2 gezeigte Element, zusätzlich mit einem Abschnitt der Spannkette und deren Überlänge, und
Fig. 4 in einer Darstellung wie Fig. 2 eine andere Ausführungsform eines erfindungsgemäßes Anschluss- und Führungselementes.

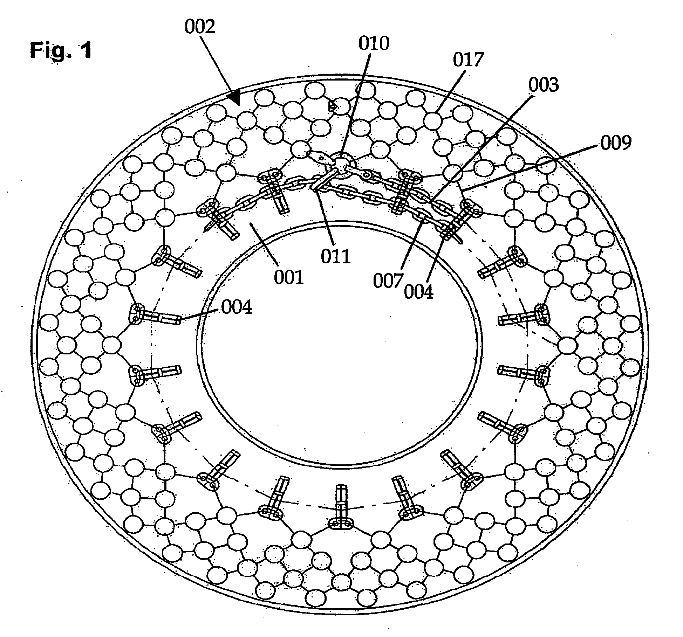

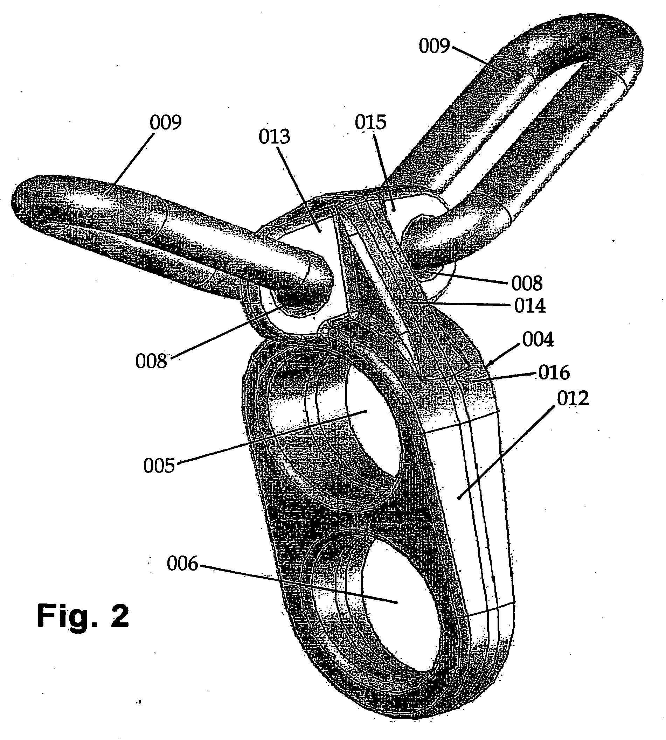

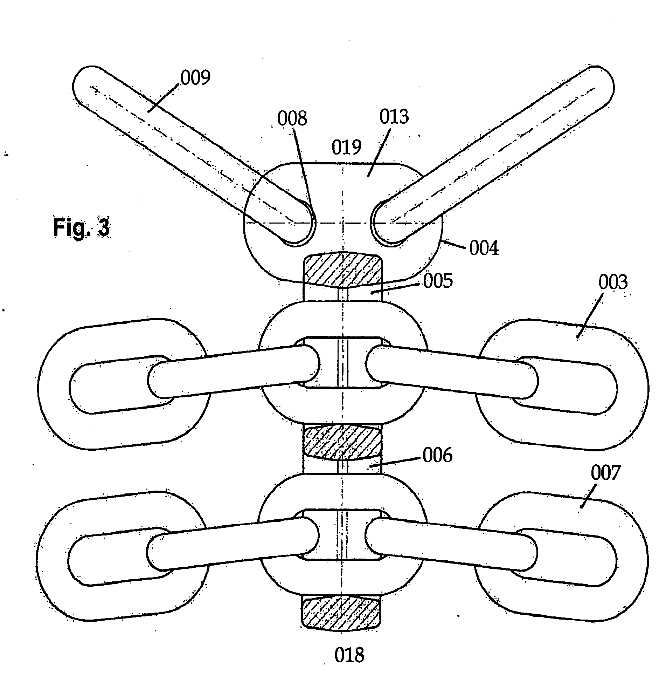

Die Seitenansicht nach Fig.1 zeigt einen Fahrzeugreifen 001, beispielsweise eines Schwerfahrzeuges, wobei auf diesen Reifen eine Reifenschutzkette 002 aufgezogen ist. Bei einer solchen Reifenkette wird das Seitennetz 017 mit Hilfe eines seitlichen Spannstranges, im vorliegenden Fall einer Spannkette 003 gespannt und an dem Reifen gehalten. Zur Verbindung des Seitennetzes 017 mit dem Spannstrang 003 werden Anschluss- und Führungselemente 004 verwendet, welche einerseits - und hier wird auf die Fig. 2 und 3 verwiesen - Ösen 005, 006 zur Aufnahme des Spannstranges 003 und einer Überlänge 007 des Spannstranges besitzen und anderseits Ösen 008, in welche geschweißte Anschlussglieder 009 eingefügt sind, die zur Verbindung des Elementes 004 mit dem Seitennetz 017 dienen.

Aus Fig. 1 ist ersichtlich, dass der Anfang der Spannkette in einen Ring 010 eingehängt ist, sodann durch jeweils radial außen liegende Ösen 005 von hier insgesamt 17 Elementen 004 geführt ist und an einem Sperrstück 011, welches in den Ring 010 eingehängt ist, nach dem Spannen fixiert ist, wobei die ab diesem Sperrstück 011 verbleibende, ungespannte Überlänge 007 der Spannkette 003 durch weiter innen liegende Ösen 006 mehrerer, im vorliegenden Fall vier Elemente 004 geführt ist, wobei das Ende dieser Spannkette letztlich an einem Glied der Seitenkette fixiert ist.

Aus Fig. 2 geht insbesondere hervor, dass ein Anschluss- und Führungselement 004 zwei plattenförmige Abschnitte 012, 013 aufweist, nämlich einen größeren Innenabschnitt 012 mit den Ösen 005, 006, die in einer ersten Ebene 018 liegen, und einen kleineren Außenabschnitt 013, welcher die Ösen 008 aufweist, die in einer zweiten, zu der ersten Ebene orthogonal verlaufenden Ebene 019 liegen. Die Ösen 005, 006 sowie die Ösen 008 sind sämtliche im wesentlichen kreisrund ausgebildet, wobei die Ösen des größeren Innenabschnittes 012 einen größeren Durchmesser aufweisen, als die Ösen 008 des Außenabschnittes 013. Bei der Ausführung nach Fig. 2 nimmt die Stärke des plattenförmigen Innenabschnittes 012 radial nach innen zu ab. Dadurch ist eine Gewichtsersparnis möglich, da die Überlänge 007 keine so große Abstützfläche benötigt, wie der gespannte Teil der Spannkette 003.

Der Fig. 2 ist weiters zu entnehmen, dass das Element 004 mit zwei Verstärkungsstegen 014 versehen ist, von welchen allerdings in der gewählten Darstellung bloß der nach vorne zeigende Steg 014 ersichtlich ist. Diese Verstärkungsstege verbinden die Seitenflächen 015 des plattenförmigen Außenabschnittes 013 mit dem äußeren Rand 016 des plattenförmigen Innenabschnittes 012.

In Fig. 3 ist deutlich die Führung der Spannkette 003 sowie der Überlänge 007 in der weiter außen liegenden Öse 005 bzw. der weiter innen liegenden Öse 006 zu sehen und ebenso die Aufnahme der geschweißten Anschlussglieder 009 in den Ösen 008 des kleineren Außenabschnittes 013 des Elementes 004.

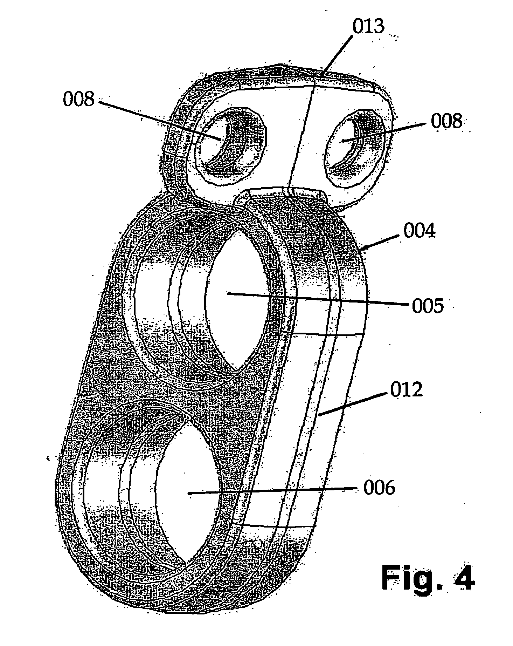

Fig. 4 zeigt eine Variante eines Anschluss- und Führungselementes 004, welche im wesentlichen der zuvor gezeigten und beschriebenen entspricht, doch unterscheidet sich diese Variante von jener nach Fig. 2 dadurch, dass keine Verstärkungsstege vorgesehen sind und dass die Stärke des plattenförmigen Innenabschnittes 012 in radialer Richtung gleich bleibt.

Es sei darauf hingewiesen, dass im Rahmen des in den Patentansprüchen begehrten Schutzes andere Varianten möglich sind. Beispielsweise muss der Spannstrang nicht notwendigerweise als Kette ausgebildet sein, es kann sich auch um ein Seil oder einen elastischen Gummizug etc. handeln. Die Anschlussglieder, welche in die äußeren Ösen 008 eingehängt werden, können auch eine andere Form aufweisen, als jene aus Fig. 2 und Fig. 3 ersichtliche.

## Patentansprüche

1. Anschluss- und Führungselement (004) für eine Reifenkette (002), zur Verbindung eines Seitennetzes der Reifenkette mit einem seitlichen Spannstrang (003) sowie zur Aufnahme einer Überlänge (007) des Spannstranges, wobei das Element (004) zumindest zwei Ösen (005, 006, 008) zur Aufnahme von Spannstrang, Überlänge und Verbindungsgliedern (009) zum Seitennetz besitzt und zwei Ösen für Spannstrang und Überlänge in einer gemeinsamen Ebene liegen,
**dadurch gekennzeichnet, dass**
zusätzlich zu den zwei, in einer ersten Ebene (018) liegenden Ösen (005, 006) zur Aufnahme von Spannstrang (003) und dessen Überlänge (007) zwei in einer zweiten, zu der ersten Ebene im wesentlichen orthogonal verlaufenden Ebene (019) liegende Ösen (008) für die Aufnahme der Verbindungsglieder (009) zum Seitennetz vorgesehen sind.

2. Anschluss- und Führungselement (004) nach Anspruch 1, **dadurch gekennzeichnet, dass** es zwei plattenartige Abschnitte (012, 013) aufweist, nämlich einen größeren Innenabschnitt (012) mit den in der ersten Ebene (018) liegenden Ösen (005, 006) und einen kleineren Außenabschnitt (013) mit den in der zweiten, zu der ersten Ebene im wesentlichen orthogonal verlaufenden Ebene (019) liegende Ösen (008).

3. Anschluss- und Führungselement (004) nach Anspruch 1 oder 2, **dadurch gekennzeichnet, dass** die in der ersten Ebene (018) liegenden Ösen (005, 006) im wesentlichen kreisrund ausgebildet sind.

4. Anschluss- und Führungselement (004) nach einem der Ansprüche 1 bis 3, **dadurch gekennzeichnet, dass** die in der zweiten Ebene (019) liegenden Ösen (008) im wesentlichen kreisrund ausgebildet sind.

5. Anschluss- und Führungselement (004) nach einem der Ansprüche 2 bis 4, **dadurch gekennzeichnet, dass** die Stärke des plattenförmigen Innenabschnittes (012) radial nach innen zu abnimmt.

6. Anschluss- und Führungselement (004) nach einem der Ansprüche 1 bis 4, **dadurch gekennzeichnet, dass** die in der ersten Ebene (018) liegenden Ösen (005, 006) im wesentlichen gleich ausgebildet sind.

7. Anschluss- und Führungselement (004) nach einem der Ansprüche 1 bis 6, **dadurch gekennzeichnet, dass** die in der zweiten Ebene (019) liegenden Ösen (008) im wesentlichen gleich ausgebildet sind.

8. Anschluss- und Führungselement (004) nach einem der Ansprüche 2 bis 7, **dadurch gekennzeichnet, dass** zwei Verstärkungsstege (014) vorgesehen sind, welche die Seitenflächen (015) des plattenförmigen Außenabschnittes (013) mit dem äußeren Rand (016) des plattenförmigen Innenabschnittes (012) verbinden.

9. Reifenkette mit einem die Lauffläche eines Reifens bedeckenden, Gleit- und/oder Kettenschutzglieder aufweisend Netz sowie mit zumindest einem Seitennetz (017), wobei das Seitennetz über einen seitlichen Spannstrang (003) mit Hilfe einer Mehrzahl von Anschluss- und Führungselementen (004) nach einem der Ansprüche 1 bis 8 verbunden ist und eine Überlänge (007) des Spannstranges in einer der Ösen (005) der Elemente aufgenommen werden kann.

10. Reifenkette nach Anspruch 9, **dadurch gekennzeichnet, dass** der Spannstrang (003) durch radial weiter außen liegende Ösen (005) der beiden Ösen (005, 006) geführt und die Überlänge (007) in radial weiter innen liegenden (006) dieser Ösen aufgenommen ist.

11. Reifenkette nach Anspruch 9 oder 10, **dadurch gekennzeichnet, dass** der Spannstrang (003) als Spannkette ausgebildet ist.

12. Reifenkette nach einem der Ansprüche 9 bis 11, **dadurch gekennzeichnet, dass** in die in der zweiten Ebene (019) liegenden Ösen (008) je ein geschweißtes Kettenglied (009) eingefügt ist, welches seinerseits an das Seitennetz angeschlossen ist.

## Claims

1. A connecting and guiding element (004) for a tire chain (002) for connecting a side net of the tire chain to a lateral tension cord (003) and also for taking up an excess length (007) of the tension cord, wherein said element (004) possesses at least two eyes (005, 006, 008) for the accommodation of said tension cord, excess length and shackles (009) for the side net, and two eyes for said tension cord and excess length are in a common plane,
**characterized in that**
in addition to said two eyes (005, 006) disposed in a first plane (018) for the accommodation of said tension cord (003) and its excess length (007) there are provided two eyes (008) disposed in a second plane (019) extending substantially orthogonally to said first plane and adapted to accommodate said shackles (009) for said side net.

2. The connecting and guiding element (004) as defined in claim 1, **characterized in that** it exhibits two plate-shaped parts (012, 013), a relatively large inner part (012) comprising said eyes (005, 006) disposed in said first plane (018) and a smaller outer part (013) comprising said eyes (008) disposed in said second plane (019) extending substantially orthogonally to said first plane.

3. The connecting and guiding element (004) as defined in claim 1 or claim 2, **characterized in that** said eyes (005, 006) disposed in said first plane (018) are of substantially circular shape.

4. The connecting and guiding element (004) as defined in any one of claims 1 to 3, **characterized in that** said eyes (008) disposed in said second plane (019) are of substantially circular shape.

5. The connecting and guiding element (004) as defined in any one of claims 2 to 4, **characterized in that** the thickness of said plate-shaped inner part (012) decreases radially inwardly.

6. The connecting and guiding element (004) as defined in any one of claims 1 to 4, **characterized in that** said eyes (005, 006) disposed in said first plane (018) are substantially of the same shape.

7. The connecting and guiding element (004) as defined in any one of claims 1 to 6, **characterized in that** said eyes (008) disposed in said second plane (019) are substantially of the same shape.

8. The connecting and guiding element (004) as defined in any one of claims 2 to 7, **characterized in that** two reinforcing bars (014) are provided, which connect the lateral surfaces (015) of said plate-shaped outer part (013) to the outer edge (016) of said plate-shaped inner part (012).

9. A tire chain having a net which covers the tread of a tire and has sliding and/or chain protecting elements and also having at least one side net (017), wherein said side net is connected via a lateral tension cord (003) with the aid of a plurality of connecting and guiding elements (004) as defined in any one of claims 1 to 8 and an excess length (007) of said tension cord can be taken up in one of said eyes (005).

10. The tire chain as defined in claim 9, **characterized in that** said tension cord (003) is guided through the radially more outwardly disposed eyes (005) of said two eyes (005, 006) and the excess length (007) is accommodated in the radially more inwardly disposed eyes (006) of said eyes.

11. The tire chain as defined in claim 9 or claim 10, **characterized in that** said tension cord (003) is in the form of a tensioning chain.

12. The tire chain as defined in any one of claims 9 to 11, **characterized in that** in each of said eyes (008) disposed in said second plane (019) there is provided a welded link (009), which in turn is connected to said side net.

## Revendications

1. Élément de jonction et de guidage (004) pour une chaîne de pneu (002), destiné à relier un treillis latéral de la chaîne avec un lien tendeur (003) latéral, et destiné à recevoir une surlongueur (007) du lien tendeur, l'élément (004) comportant au moins deux oeillets (005, 006, 008), destinés à recevoir le lien tendeur, la surlongueur, et des maillons d'assemblage (009) pour l'assemblage avec le treillis latéral et les deux oeillets pour le lien tendeur et la surlongueur étant disposés dans un plan commun,
**caractérisé en ce que**
en plus des deux oeillets (005, 006), disposés dans un premier plan (018) et destinés à recevoir le lien tendeur (003) et la surlongueur (007) de celui-ci, il est prévu deux oeillets (008), disposés dans un deuxième plan (019), orienté sensiblement orthogonalement au premier plan, et destinés à recevoir les maillons d'assemblage (009) pour l'assemblage avec le treillis latéral.

2. Élément de jonction et de guidage (004) selon la revendication 1, **caractérisé en ce qu'**il comporte deux parties (012, 013) en forme de plaque, à savoir une partie intérieure (012) plus grande, munie des oeillets (005, 006) situés dans le premier plan (018), et une partie extérieure (013) plus petite munie des oeillets (008) situés dans le deuxième plan (019) orienté sensiblement orthogonalement au premier plan.

3. Élément de jonction et de guidage (004) selon la revendication 1 ou 2, **caractérisé en ce que** les oeillets (005, 006) situés dans le premier plan (018) sont réalisés avec une forme sensiblement circulaire.

4. Élément de jonction et de guidage (004) selon l'une quelconque des revendications 1 à 3, **caractérisé en ce que** les oeillets (008) situés dans le deuxième plan (019) sont réalisés avec une forme sensiblement circulaire.

5. Élément de jonction et de guidage (004) selon l'une quelconque des revendications 2 à 4, **caractérisé en ce que** l'épaisseur de la partie intérieure (012) en forme de plaque diminue dans le sens radial vers l'intérieur.

6. Élément de jonction et de guidage (004) selon l'une quelconque des revendications 1 à 4, **caractérisé en ce que** les oeillets (005, 006) situés dans le premier plan (018) sont réalisés de manière sensiblement identique.

7. Élément de jonction et de guidage (004) selon l'une quelconque des revendications 1 à 6, **caractérisé en ce que** les oeillets (008) situés dans le deuxième plan (019) sont réalisés de manière sensiblement identique.

8. Élément de jonction et de guidage (004) selon l'une quelconque des revendications 2 à 7, **caractérisé en ce qu'**il est prévu deux nervures de renforcement (014), par lesquelles les faces latérales (015) de la partie extérieure (013) en forme de plaque sont reliées au bord extérieur (016) de la partie intérieure (012) en forme de plaque.

9. Chaîne de pneu comportant un treillis, muni de maillons de glissement et/ou de protection et couvrant la surface de roulement d'un pneu, ainsi qu'au moins un treillis latéral (017), le treillis latéral étant relié par l'intermédiaire d'un lien tendeur (003) latéral au moyen d'une pluralité d'éléments de jonction et de guidage (004) selon l'une quelconque des revendications 1 à 8, et une surlongueur (007) du lien tendeur pouvant être reçue dans l'un des oeils (005) des éléments.

10. Chaîne de pneu selon la revendication 9, **caractérisée en ce que** le lien tendeur (003) est guidé à travers des oeillets (005) des deux oeillets (005, 006), à savoir ceux situés plus vers l'extérieur dans le sens radial, et la surlongueur (007) est reçue dans les oeillets (006) des oeillets (005, 006), à savoir ceux situés plus vers l'intérieur dans le sens radial.

11. Chaîne de pneu selon la revendication 9 ou 10, **caractérisée en ce que** le lien tendeur (003) est réalisé sous forme de chaîne de tension.

12. Chaîne de pneu selon l'une quelconque des revendications 9 à 11, **caractérisée en ce que** dans chacun des oeillets (008) situés dans le deuxième plan (019) est inséré un maillon de chaîne (009) soudé, lequel est assemblé, pour sa part, au treillis latéral.
